# EUROPÄISCHE PATENTSCHRIFT

(11) **EP 0 809 038 B1**
(45) Veröffentlichungstag und Bekanntmachung des Hinweises auf die Patenterteilung: **10.10.2001**
(21) Anmeldenummer: 96118800.0
(22) Anmeldetag: 23.11.1996
(51) Int. Cl.: F16F 13/10

(54) **Hydrolager**
Hydraulic support
Support hydraulique

(30) Priorität: 24.05.1996 DE 19620976
(43) Veröffentlichungstag der Anmeldung: 26.11.1997
(73) Patentinhaber: Firma Carl Freudenberg, 69469 Weinheim (DE)
(72) Erfinder: Simuttis, Arnold, Dr., 55545 Bad Kreuznach (DE)

(56) Entgegenhaltungen:
- EP-A- 0 569 676
- DE-A- 3 707 445
- DE-A- 4 036 517
- DE-A- 19 515 838
- PATENT ABSTRACTS OF JAPAN vol. 018, no. 613 (M-1709), 22.November 1994 & JP 06 235437 A (TOYODA GOSEI CO LTD), 23.August 1994,

## Beschreibung

### Technisches Gebiet

Die Erfindung betrifft ein Hydrolager, umfassend ein Traglager und ein Auflager, die durch einen im wesentlichen kegelstumpfförmigen Federkörper aus elastomerem Werkstoff aufeinander abgestützt sind und einen jeweils mit Dämpfungsflüssigkeit gefüllten Arbeits- und Ausgleichsraum begrenzen, die durch eine Trennwand voneinander getrennt und durch einen Dämpfungskanal flüssigkeitsleitend verbunden sind, wobei der Federkörper zwei einander radial gegenüberliegende, querweiche Druckfederabschnitte und in Umfangsrichtung zwischen den Druckfederabschnitten zwei einander radial gegenüberliegende, querharte Schubfederabschnitte aufweist.

### Stand der Technik

Ein solches Hydrolager ist aus der DE 37 07 445 A1 bekannt. Der Federkörper ist durch Vulkanisation mit dem rotationssymmetrisch ausgebildeten Traglager und dem Auflager verbunden, wobei der Federkörper nierenförmige Bereiche mit geringer Werkstoffdicke aufweist, die zueinander entgegengesetzt und symmetrisch zu einer Querachse liegen und wobei die Bereiche aus dünnwandigen, gewölbten Rollbälgen bestehen. Um größere Unterschiede in den Radialfederraten zu erreichen, ist der Federkörper durch einen Zwischenring geteilt. Bei dem vorbekannten Hydrolager ist von Nachteil, daß durch den Zwischenring innerhalb des Federkörpers die Wärmeleitung am Traglager bei der Vulkanisation wenig zufriedenstellend ist.

Der Erfindung liegt die Aufgabe zugrunde, ein Hydrolager der vorbekannten Art derart weiterzuentwickeln, daß die Radialfederraten der Druckfederabschnitte und Schubfederabschnitte stärker voneinander abweichen und daß die Vulkanisation des Federkörpers mit dem Traglager und dem Auflager - unabhängig vom Werkstoff des Traglagers - verbessert wird.

### Darstellung der Erfindung

Diese Aufgabe wird erfindungsgemäß durch die Merkmale von Anspruch 1 gelöst. Auf vorteilhafte Ausgestaltungen nehmen die Unteransprüche Bezug.

Zur Lösung der Aufgabe ist es im Rahmen der vorliegenden Erfindung vorgesehen, daß das Traglager den Federkörper in den Druckfederabschnitten in radialer Richtung derart übergreift, daß der Federkörper und das Traglager durch eine Radialfläche miteinander verbunden sind und daß das Traglager und der Federkörper in den Schubfederabschnitten durch eine sich im wesentlichen parallel zur Achse des Hydrolagers erstreckende Axialfläche miteinander verbunden sind.

Hierbei ist von Vorteil, daß die Radialfederraten der Druck- und Schubfederabschnitte durch die, asymmetrische Gestalt des Traglagers stark voneinander abweichen, ohne daß es eines Federkörpers im Zwischenring bedarf. Die Druckfederabschnitte umfassen querweiche Druckfedern, wobei das Traglager in diesen Abschnitten bevorzugt durch Drehen hergestellt ist. Durch die starken Schubfedern ist eine querharte Abstützung bei Einleitung von radialen Schwingungen in Richtung einer gedachten Ebene bedingt, die die Schubfederabschnitte miteinander verbindet. Die Schubfeder ist - bezogen auf die Druckfeder - massiver ausgeführt und weist eine sehr große Anbindungshöhe an der Axialfläche des Traglagers auf.

Die Druckfederabschnitte und die Schubfederabschnitte können jeweils durch gedachte Ebenen verbunden werden, wobei die Ebenen bevorzugt rechtwinklig zueinander angeordnet sind.

Das Traglager weist bevorzugt in den Druckfederabschnitten radial innenseitig einen sich in axialer Richtung erstreckenden, kombinierten Radial- und Axialanschlag auf, wobei der Radial- und Axialanschlag und der Federkörper durch eine Tasche in radialer Richtung voneinander beabstandet sind. Die Taschen innerhalb der Druckfederabschnitte bewirken eine weitere Reduzierung der Pedersteifigkeit der weichen Querfeder, was für viele Fälle von hervorzuhebendem Vorteil ist. Die Taschen weisen bevorzugt eine größere Erstreckung in Umfangsrichtung auf, als das Traglager. Der Unterschied der Breite von Taschen und Traglager hat Einfluß auf das Radialfederverhältnis zwischen den Druckfederabschnitten und den Schubfederabschnitten. Je größer die Breite der Tasche bezogen auf die Breite des Kerns ist, desto querweicher sind die Druckfederabschnitte.

Das Traglager kann in den Schubfederabschnitten eine axiale Erstreckung aufweisen, die der axialen Erstreckung des Radial- und Axialanschlags in den Druckfederabschnitten entspricht, wobei *das* Traglager in den Schubfederabschnitten einstückig ineinander übergehend mit einem Axialanschlag ausgebildet ist und wobei das Traglager und der Axialanschlag außenumfangsseitig gemeinsam von der Axialfläche begrenzt sind. Der kombinierte Radial- und Axialanschlag der Druckfederabschnitte sowie der Axialanschlag der Schubfederabschnitte sind als Einfederanschläge ausgebildet zur Begrenzung extremer Auslenkbewegungen des Traglagers bezogen auf das Auflager in axialer Richtung. Die Anschläge gelangen beispielsweise zur Begrenzung extremer Auslenkbewegungen mit der Trennwand in Berührung, die den Arbeitsraum und den Ausgleichsraum voneinander trennt. Durch die einstückige Ausgestaltung der Anschläge mit dem Traglager weist das gesamte Hydrolager einen teilearmen, einfachen und kostengünstigen Aufbau auf.

Die Gebrauchseigenschaften des erfindungsgemäßen Hydrolagers sind dann besonders vorteilhaft, wenn das Verhältnis aus der Anbindungsfläche des Federkörpers an der Axialfläche zur Anbindungsfläche des Federkörpers an der Radialfläche zumindest zwei beträgt. Die Druckfeder im Druckfederabschnitt ist dadurch querweich, die Schubfeder im Schubfederabschnitt durch die große Anbindungsfläche des Federkörpers am Traglager vergleichsweise deutlich härter.

Die Axialfläche kann konkav gewölbt und unter Vermeidung sprunghafter Richtungsänderungen ausgebildet sein. Durch die Wölbung des Traglagers wird einerseits die Anbindungsfläche an der Axialfläche vergrößert, was im Hinblick auf eine weiter verbesserte Haltbarkeit und daraus resultierende gleichbleibend gute Gebrauchseigenschaften während der gesamten Gebrauchsdauer von Vorteil ist.

Durch die Wölbung wird andererseits die Querfederrate der Druckfederabschnitte weiter reduziert.

Das Traglager kann durch einen Kern gebildet sein, der aus polymerem Werkstoff besteht, wobei der Kern auf der dem Auflager abgewandten Seite zumindest eine Ausnehmung zur Aufnahme eines Vulkanisierwerkzeuges aufweist und wobei die Wandstärken des Kerns von im wesentlichen übereinstimmender Größe sind. Aus einem Kunststoff bestehende Traglager gelangen bevorzugt dann zur Anwendung, wenn das auf dem Traglager abgestützte Maschinenteil erheblich Wärme in Richtung des Hydrolagers abstrahlt, wie dies beispielsweise der Fall ist, wenn das Hydrolager als Lager für eine Verbrennungskraftmaschine zur Anwendung gelangt. Durch die Verwendung eines Kunststoffkerns ist die Übertragung der von der Verbrennungskraftmaschine abgestrahlte Wärme in den Federkörper stark reduzierwt. Dieser während des Betriebs des Hydrolagers an sich wünschenswerter Effekt erschwert jedoch prinzipiell die Vulkanisation des Kunststoffkerns mit dem Federkörper. Durch die Ausnehmung zur Aufnahme eines Vulkanisierwerkzeugs kann zur Vulkanisierung des Federkörpers mit dem Traglager das Vulkanisierwerkzeug in die Ausnehmungen eingetaucht werden und den Kern stützen. Durch die verbleibende, relativ dünnere Wandstärke wird die Vulkanisation des Kerns mit dem Federkörper wesentlich erleichtert.

### Kurzbeschreibung der Zeichnung

Das erfindungsgemäße Hydrolager wird nachfolgend anhand der beigefügten Zeichnungen näher erläutert.

Diese zeigen:

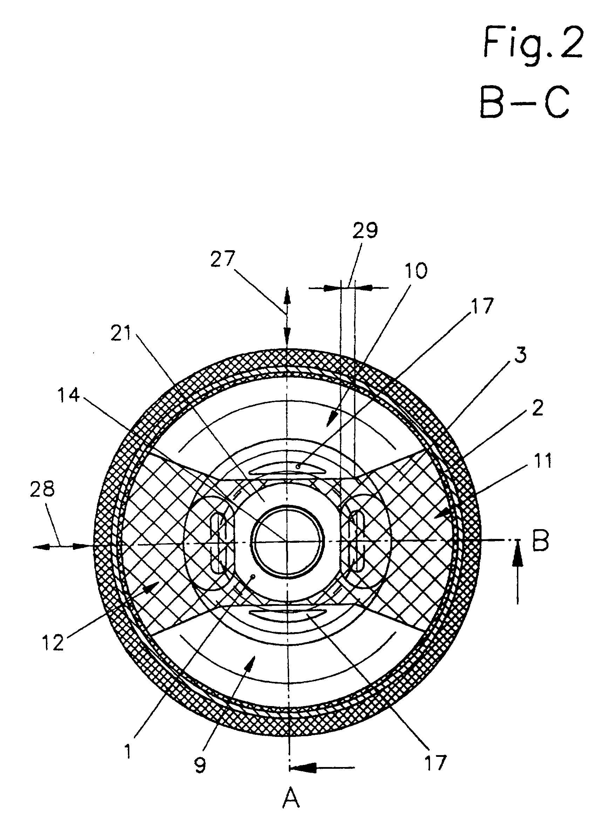

Ein erstes Ausführungsbeispiel mit einem Traglager aus einem metallischen Werkstoff in quergeschnittener Darstellung entlang der Linie A-B aus Fig. 2.

Fig. 2 einen Schnitt durch das Hydrolager aus Fig. 1 entlang der Linie B-C.

Fig. 3 eine zweites Ausführungsbeispiel eines Hydrolagers, ähnlich dem Ausführungsbeispiel aus Fig. 1, wobei das Traglager durch einen Kunststoffkern gebildet ist.

### Ausführung der Erfindung

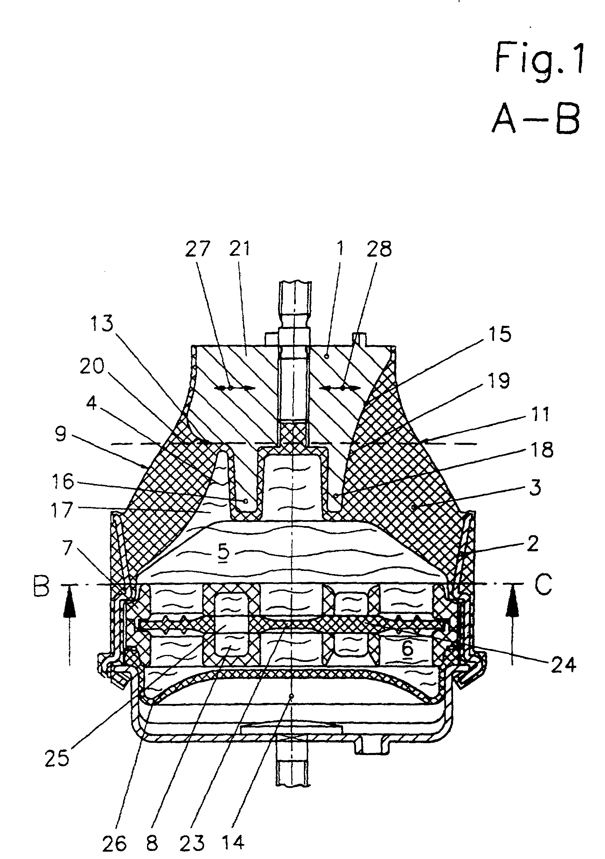

In Fig. 1 ist ein Ausführungsbeispiel eines erfindungsgemäßen Hydrolagers gezeigt, bei dem ein Traglager 1 und ein Auflager 2 durch den Federkörper 3 verbunden sind. Der Arbeitsraum 5 ist durch das Traglager 1, den Federkörper 3 und eine Trennwand 7 begrenzt und mit einer Dämpfungsflüssigkeit 4 gefüllt. Die Trennwand 7 umfaßt einen Dämpfungskanal 8, der den Arbeitsraum 5 und den Ausgleichsraum 6 flüssigkeitsleitend verbindet. In diesem Beispiel besteht der Dämpfungskanal 8 aus zwei Teilkanälen 8.1, 8.2, die in einer funktionstechnischen Reihenschaltung angeordnet sind, wobei die Teilkanäle 8.1, 8.2 in axialer Richtung beiderseits einer schwingfähigen Membran 23 aus elastomerem Werkstoff angeordnet sind, die einen Bestandteil der Trennwand 7 bildet, wobei die Membran 23 mit einer Kanaltrennung 24 versehen ist und zur flüssigkeitsleitenden Verbindung der Teilkanäle 8.1, 8.2 zumindest eine Ausnehmung 25 innerhalb der Kanaltrennung 24 aufweist. Die Teilkanäle 8.1, 8.2 weisen jeweils einen nutförmigen Querschnitt auf, der axial in Richtung der Membran 23 offen ist, wobei die stirnseitigen Enden der Teilkanäle 8.1, 8.2 und die Kanaltrennung 24 der Membran 23 unter axialer Vorspannung dichtend aufeinander abgestützt sind.

Bei einer derartigen Ausgestaltung der Trennwand 7 ist von Vorteil, daß der Dämpfungskanal eine große Länge aufweist, die Membran 23 trotzdem aber eine große Fläche zur Isolierung höherfrequenter Schwingungen hat.

Der Ausgleichsraum 6 ist auf der der Trennwand 7 abgewandten Seite durch einen Rollbalg 26 aus elastomerem Werkstoff begrenzt und zur weitgehend drucklosen Aufnahme von Flüssigkeitsbestandteilen aus dem Arbeitsraum 5 geeignete.

Durch die rechtwinklige Schnittführung A-B in Fig. 2 sind in Fig. 1 sowohl ein Druckfederabschnitt 9 als auch ein Schubfederabschnitt 11 zu erkennen. Das Traglager 1 ist im Druckfederabschnitt 9 bezogen auf den Schubfederabschnitt 11 asymmetrisch ausgebildet, ebenso wie der Federkörper 3. Im Druckfederabschnitt 9 übergreift das Traglager 1 den Federkörper 3 in radialer Richtung, wobei der Federkörper an einer Radialfläche 13 des Traglagers 1 anvulkanisiert ist. Das Traglager 1 ist in den Druckfederabschnitten 9, 10 mit einem einstückig ausgebildeten kombinierten Radial- und Axialanschlag 16 versehen, wobei der Radial- und Axialanschlag 16 durch eine Tasche 17 in radialer Richtung vom Federkörper 3 beabstandet ist. Die querweiche Richtung wird durch den Pfeil mit dem Bezugszeichen 27 symbolisiert, die querharte Richtung durch den Pfeil, der mit 28 bezeichnet ist.

Der Federkörper 3 ist in den Schubfederabschnitten 11, 12 an die Axialfläche 15 des Traglagers 1 vulkanisiert, wobei sich die Axialfläche 15 im wesentlichen parallel zu Achse 14 des Hydrolagers erstreckt. Die Schubfederabschnitte 11, 12 des Traglagers 1 umfassen einen Axialanschlag 18, der einstückig mit dem Traglager 1 ausgebildet ist und einen Teil der Axialfläche 15 bildet. Der Radial- und Axialanschlag 16 sowie der Axialanschlag 18 erstrecken sich in axialer Richtung gleichweit in den Arbeitsraum 5. Zur Begrenzung von extremen Auslenkbewegungen des Traglagers 1 axial in Richtung des Auflagers 2 schlagen die Anschläge 16, 18 auf der Trennwand 7 an.

In Fig. 2 ist ein Schnitt durch das Hydrolager aus Fig. 1 entlang der Linie B-C gezeigt. Es ist zu erkennen, daß die Druckfederabschnitte 9, 10 und die Schubfederabschnitte 11,12 gleichmäßig in Umfangsrichtung verteilt angeordnet sind, wobei eine gedachte erste Ebene die die beiden Druckfederabschnitte 9, 109 verbindet, zu einer gedachten zweiten Ebene, die die beiden Schubfederabschnitte 11, 12 miteinander verbindet, senkrecht angeordnet ist. Die Taschen 17, die innerhalb des Federkörpers 3 in den Druckfederabschnitten 9, 10 angeordnet sind, weisen eine größere Breite auf< als das Traglager 1, wobei der Breitenunterschied 29 Einfluß auf das Radialfederratenverhältnis zwischen Druckfederabschnitten 9, 10 und Schubfederabschnitten 11, 12 nimmt. Um eine möglichst querweiche 27 Federrate der ersten Druckfederabschnitte 9, 10 zu erzielen, ist es vorgesehen, daß die Breite der Taschen 17 größer ist, als die Breite des Traglagers 1.

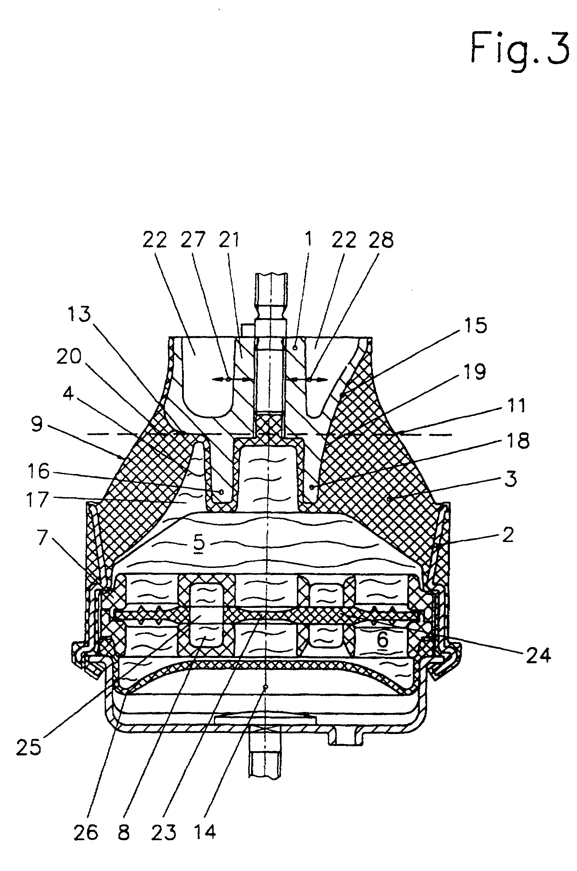

In Fig. 3 ist ein zweites Ausführungsbeispiel des erfindungsgemäβen Hydrolagers gezeigt, bei dem das Traglager 1 aus einem Kern 21 aus polymerem Werkstoff besteht. Innerhalb des Kerns 21 sind Ausnehmungen 22 vorgesehen, zur Aufnahme eines Vulkanisierwerkzeugs. Die Wandstärken des Kerns 21 sind im wesentlichen von übereinstimmender Größe.

Auch in diesem Ausführungsbeispiel ist, ebenso wie im Ausführungsbeispiel nach Fig. 1 die Anbindungsfläche 19 der Schubfederabschnitte 11, 12 an die Axialfläche 15 deutlich größer, als die Anbindungsfläche 20 der Druckfederabschnitte 9, 10 an die Radialfläche 13.

## Patentansprüche

1. Hydrolager, umfassend ein Traglager (1) und ein Auflager (2), die durch einen im wesentlichen kegelstumpfförmigen Federkörper (3) aus elastomerem Werkstoff aufeinander abgestützt sind und einen jeweils mit Dämpfungsflüssigkeit gefüllten Arbeits- und Ausgleichsraum (5, 6) begrenzen, die durch eine Trennwand (7) voneinander getrennt und durch einen Dämpfungskanal (4) flüssigkeitsleitend verbunden sind, wobei der Federkörper (3) zwei einander radial gegenüberliegende, querweiche Druckfederabschnitte (9, 10) und in Umfangsrichtung zwischen den Druckfederabschnitten (9, 10) zwei einander radial gegenüberliegende, querharte Schubfederabschnitte (11, 12) aufweist, **dadurch gekennzeichnet, daß** das Traglager (1) den Federkörper (3) in den Druckfederabschnitten (9, 10) in radialer Richtung derart übergreift, daß der Federkörper (3) und das Traglager (1) durch eine Radialfläche (13) miteinander verbunden sind, und daß das Traglager (1) und der Federkörper (3) in den Schubfederabschnitten (11, 12) durch eine sich im wesentlichen parallel zur Achse (14) des Hydrolagers erstreckende Axialfläche (15) miteinander verbunden sind.

2. Hydrolager nach Anspruch 1, **dadurch gekennzeichnet, daß** das Traglager (1) in den Druckfederabschnitten (9, 10) radial innenseitig einen sich in axialer Richtung erstreckenden kombinierten Radial- und Axialanschlag (16) aufweist und daß der Radial- und Axialanschlag (16) und der Federkörper (3) durch eine Tasche (17) in radialer Richtung voneinander beabstandet sind.

3. Hydrolager nach einem der Ansprüche 1 oder 2, **dadurch gekennzeichnet, daß** das Traglager (1) in den Schubfederabschnitten (11, 12) eine axiale Erstreckung aufweist, die der axialen Erstreckung des Radial- und Axialanschlags (16) in den Druckfederabschnitten (9, 10) entspricht, daß das Traglager (1) in den Schubfederabschnitten (11, 12) einstückig ineinander übergehend mit einem Axialanschlag (18) ausgebildet ist und daß das Traglager (1) und der Axialanschlag (18) außenumfangsseitig gemeinsam von der Axialfläche (15) begrenzt sind.

4. Hydrolager nach einem der Ansprüche 1 bis 3, **dadurch gekennzeichnet, daß** das Verhältnis aus der Anbindungsfläche (19) des Federkörpers (3) an der Axialfläche (15) zur Anbindungsfläche (20) des Federkörpers (3) an der Radialfläche (13) zumindest zwei beträgt.

5. Hydrolager nach einem der Ansprüche 1 bis 4, **dadurch gekennzeichnet, daß** die Axialfläche (15) konkav gewölbt und unter Vermeidung sprunghafter Richtungsänderungen ausgebildet ist.

6. Hydrolager nach einem der Ansprüche 1 bis 5, **dadurch gekennzeichnet, daß** das Traglager (1) durch einen Kern (21) gebildet ist, der aus polymerem Werkstoff besteht, daß der Kern (21) auf der dem Auflager (2) abgewandten Seite zumindest eine Ausnehmung (22) zur Aufnahme eines Vulkanisierwerkzeuges aufweist und daß die Wandstärken des Kerns von im wesentlichen übereinstimmender Größe sind.

## Claims

1. A hydraulic mount, comprising a carrying bearing (1) and a support (2) which are supported one on the other by means of an essentially frustoconical spring body (3) composed of elastomeric material and delimit a working and a compensating space (5, 6) which are in each case filled with damping fluid and which are separated from one another by a partition (7) and are connected in a fluid-conducting manner by a damping duct (4), the spring body (3) having two transversely soft compression-spring portions (9, 10) located radially opposite one another and, in the circumferential direction between the compression-spring portions (9, 10), two transversely hard shear-spring portions (11, 12) located radially opposite one another, **characterized in that** the carrying bearing (1) engages in the radial direction over the spring body (3) in the compression-spring portions (9, 10) in such a way that the spring body (3) and the carrying bearing (1) are connected to one another by means of a radial surface (13), and **in that** the carrying bearing (1) and the spring body (3) are connected to one another in the shear-spring portions (11, 12) by means of an axial surface (15) extending essentially parallel to the axis (14) of the hydraulic mount.

2. A hydraulic mount according to claim 1, **characterized in that** the carrying bearing (1) has in the compression-spring portions (9, 10), radially on the inside, a combined radial and axial stop (16) which extends in the axial direction, and **in that** the radial and axial stop (16) and the spring body (3) are staged from one another in the radial direction by means of a pocket (17).

3. A hydraulic mount according to either one of claims 1 and 2, **characterized in that** a carrying bearing (1) has in the shear-spring portions (11, 12) an axial extent which corresponds to the axial extent of the radial and axial stop (16) in the compression-spring portions (9, 10), **in that** the carrying bearing (1) is designed in the shear-spring portions (11, 12) to merge integrally with an axial stop (18), and **in that** the carrying bearing (1) and the axial stop (18) are jointly delimited on the outer circumference by the axial surface (15).

4. A hydraulic mount according to any one of claims 1 to 3, **characterized in that** the ratio of the connecting surface (19) of the spring body (3) at the axial surface (15) to the connecting surface (20) of the spring body (3) at the radial surface (13) is at least two.

5. A hydraulic mount according to any one of claims 1 to 4, **characterized in that** the axial surface (15) is curved concavely and is designed avoiding abrupt changes in direction.

6. A hydraulic mount according to any one of claims 1 to 5, **characterized in that** the carrying bearing (1) is formed by a core (21) which is composed of polymeric material, **in that** the core (21) has, on the side facing away from the support (2), at least one recess (22) for receiving a vulcanizing tool, and **in that** the wall thicknesses of the core are of essentially identical size.

## Revendications

1. Support hydraulique comprenant un palier d'appui (1) et un support (2) qui sont appuyés l'un sur l'autre par un corps élastique (3) en matière élastomère ayant essentiellement la forme d'un cône tronqué et limitent un espace de travail et un espace de compensation (5, 6) qui sont remplis à chaque fois avec un liquide d'amortissement, qui sont séparés l'un de l'autre par une cloison (7) et qui communiquent par un canal d'amortissement (4) d'une manière permettant la circulation de liquides, le corps élastique (3) étant pourvu de deux segments élastiques de pression (9, 10) élastiques dans le sens transversal et opposés l'un à l'autre dans le sens radial et, entre les segments élastiques de pression (9, 10) dans la direction circonférentielle, de deux segments élastiques de glissement (11, 12) rigides dans le sens transversal et opposés l'un à l'autre dans le sens radial, **caractérisé en ce que** le palier d'appui (1) empiète sur le corps élastique (3) dans le sens radial, dans les segments élastiques de pression (9, 10), de manière à ce que le corps élastique (3) et le palier d'appui (1) soient reliés l'un à l'autre par une surface radiale (13), et **en ce que** le palier d'appui (1) et le corps élastique (3) sont reliés l'un à l'autre, dans les segments élastiques de glissement (11, 12), par une surface axiale (15) s'étendant de manière essentiellement parallèle à l'axe (14) du support hydraulique.

2. Support hydraulique selon la revendication 1, **caractérisé en ce que** le palier d'appui (1) est pourvu, dans les segments élastiques de pression (9, 10), sur le côté intérieur dans le sens radial, d'une butée radiale et axiale (16) combinée s'étendant dans la direction axiale, et **en ce que** la butée radiale et axiale (16) et le corps élastique (3) sont espacés l'un de l'autre dans le sens radial par une poche (17).

3. Support hydraulique selon l'une des revendications 1 ou 2, caractérisé i en ce que le palier d'appui (1) présente, dans les segments élastiques de glissement (11, 12), une étendue axiale qui correspond à l'étendue axiale de la butée radiale et axiale (16) dans les segments élastiques de pression (9, 10), en ce que le palier d'appui (1) est exécuté, dans les segments élastiques de glissement (11, 12), de manière à se confondre en ne formant qu'une seule pièce avec une butée axiale (18), et en ce que le palier d'appui (1) et la butée axiale (18) sont limités tous les deux par la surface axiale (15) sur le côté de la circonférence externe.

4. Support hydraulique selon l'une des revendications 1 à 3, **caractérisé en ce que** le rapport entre la surface d'attache (19) du corps élastique (3) sur la surface axiale (15) et la surface d'attache (20) du corps élastique (3) sur la surface radiale (13) est égal à au moins deux.

5. Support hydraulique selon l'une des revendications 1 à 4, **caractérisé en ce que** la surface axiale (15) présente une courbure concave et est exécutée de manière à éviter des changements de direction brusques.

6. Support hydraulique selon l'une des revendications 1 à 5, **caractérisé en ce que** le palier d'appui (1) est formé par un noyau (21) fait d'une matière polymère, **en ce que** le noyau (21) est pourvu, sur le côté non tourné vers le support (2), d'au moins un évidement (22) destiné à recevoir un outil de vulcanisation et **en ce que** les parois du noyau ont une épaisseur essentiellement égale.
